# EUROPÄISCHE PATENTSCHRIFT

(11) **EP 3 645 594 B1**
(45) Veröffentlichungstag und Bekanntmachung des Hinweises auf die Patenterteilung: **06.04.2022**
(21) Anmeldenummer: 18737561.3
(22) Anmeldetag: 29.06.2018
(51) Int. Cl.: C08G 18/48, C08G 18/76, C08G 18/12, C08G 18/22

(54) **ZWEIKOMPONENTIGE POLYURETHANZUSAMMENSETZUNG MIT EINSTELLBARER TOPFZEIT**
TWO-COMPONENT POLYURETHANE COMPOSITION WITH ADJUSTABLE POT LIFE
COMPOSITION DE POLYURÉTHANE À DEUX COMPOSANTS À TEMPS DE CONSERVATION RÉGLABLE

(30) Priorität: 30.06.2017 EP 17179020
(43) Veröffentlichungstag der Anmeldung: 06.05.2020
(73) Patentinhaber: Sika Technology AG, 6340 Baar (CH)
(72) Erfinder: BURCKHARDT, Urs, 8049 Zürich (CH); SCHLUMPF, Michael, 8143 Stallikon (CH); CORSARO, Antonio, 8105 Regensdorf (CH)
(74) Vertreter: Sika Patent Attorneys
(86) Internationale Anmeldenummer: PCT/EP2018/067555
(87) Internationale Veröffentlichungsnummer: WO 2019/002538

(56) Entgegenhaltungen:
- EP-A1- 0 454 219
- EP-A1- 2 706 073
- US-A- 4 788 083

## Beschreibung

### Technisches Gebiet

Die Erfindung betrifft das Gebiet der zweikomponentigen Polyurethanzusammensetzungen und ihre Verwendung, insbesondere als Klebstoff oder als Matrix in Kompositwerkstoffen.

### Stand der Technik

Zweikomponentige Polyurethanzusammensetzungen auf Basis von Polyolen und Polyisocyanaten werden bereits seit langem eingesetzt. Zweikomponentige Polyurethanzusammensetzungen haben gegenüber einkomponentigen den Vorteil, dass sie nach dem Mischen schnell aushärten und deshalb bereits nach kurzer Zeit höhere Kräfte aufnehmen und übertragen können. Für den Einsatz als strukturelle Klebstoffe oder als Matrix (Bindemittel) in Kompositwerkstoffen werden hohe Ansprüche in Bezug auf Festigkeit und Anhaftungskräfte an solche Zusammensetzungen gestellt, da derartige Klebstoffe Elemente von Last tragenden Strukturen darstellen. Insbesondere benötigen solche Zusammensetzungen im ausgehärteten Zustand gute mechanische Eigenschaften wie hohe E-Moduln bei niedrigen Dehnungswerten und hohe Zug- und Zugscherfestigkeiten, dürfen gleichzeitig aber nicht spröde sein. Weiterhin ist es, z.B. in der industriellen Fertigung wünschenswert, dass solche Zusammensetzungen möglichst schnell aushärten, was die Taktzeiten verringert.

Um die gewünschten mechanischen Eigenschaften und vor allem eine besonders schnelle Aushärtung zu erreichen, sind in solchen Zusammensetzungen hohe Anteile an Isocyanaten vorteilhaft, die in einer der beiden Komponenten in Form von freien oder an Polymere gebundenen Polyisocanaten vorliegen und nach Mischen mit der anderen Komponente, die Polyole enthält, unter Bildung eines polymeren Netzwerks aushärten. Ein hoher Gehalt an Isocyanaten führt jedoch zu Problemen. Insbesondere bei Verwendung von Vernetzungskatalysatoren, was für eine selektive, optimale Vernetzung und Aushärtung unerlässlich ist, werden solche zweikomponentigen Systeme fast unkontrollierbar schnell und die Topfzeiten viel zu kurz für eine Anwendung z.B. als Strukturklebstoff. Auch für den Einsatz als Bindemittel in Kompositwerkstoffen muss die Topfzeit lange genug sein, um eine homogene Einbettung der Fasern in die Matrix zu ermöglichen.

Für die Anwendung zweikomponentiger Polyurethanzusammensetzungen wäre es generell wünschenswert, eine genügend lange Topfzeit mit einer anschliessend sehr raschen Aushärtung und ausserordentlich schnellem Festigkeitsaufbau kombinieren zu können. Dies lässt sich mit heutigen Zweikomponentenzusammensetzungen aber kaum erreichen. Entweder ist die Topzeit sehr kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden.

Beispielsweise offenbart EP 2706 073 A1 zweikomponentige Polyurethanklebstoffe, welche in der ersten Komponente mindestens ein Polyol und in der zweiten Komponente mindestens ein Polyisocyanat enthalten. Weiterhin enthält die Zusammensetzung einen Katalysator auf Basis von Bismut oder Zirkonium und ein blockiertes Amin, welches mindestens eine Oxazolidino- oder Aldiminogruppe aufweist. Diese Zusammensetzung weist eine relativ lange Topfzeit auf, benötigt aber Wasser für die hydrolytische Spaltung der Oxazolidino- oder Aminogruppen.

EP 0 454 21 9 A1 und ebenso US 4 788 083 A offenbaren zweikomponentige Beschichtungsmaterialien (Coatings) auf Basis von Polyurethanen mit verlängerter Topfzeit. Die darin beschriebenen Zusammensetzungen sind beispielsweise bezüglich ihrer mechanischen Eigenschaften allerdings nicht als strukturelle Klebstoffe geeignet.

Es besteht daher der Wunsch nach zweikomponentigen Polyurethanzusammensetzungen, die über ausgezeichnete mechanische Eigenschaften und Adhäsionseigenschaften verfügen und die nach Applikation sehr rasch aushärten und innert äusserst kurzer Zeit, z.B. Stunden bis wenigen Tagen, Festigkeiten und Elastizität im Sinne von strukturellen Verklebungen oder Kompositwerkstoffen aufweisen. Zusätzlich sollen sie aber eine genügend lange Topfzeit aufweisen, dass eine Verarbeitung auch grösserer Bau- oder Fertigungsteile möglich ist. Weiterhin wünschenswert wäre es, die Topfzeit solcher Zusammensetzungen für die gewünschte Anwendung einstellen zu können.

### Darstellung der Erfindung

Aufgabe der vorliegenden Erfindung ist es daher, eine zweikomponentige Polyurethanzusammensetzung zur Verfügung zu stellen, welche sehr schnell zu einer mechanisch ausgezeichneten und als Strukturklebstoff oder Kompositwerkstoffmatrix geeigneten Masse aushärtet, aber dabei gleichzeitig eine genügend lange, innerhalb gewisser Grenzen einstellbare Topfzeit aufweist, dass sie problemlos verarbeitet werden kann.

Überraschenderweise wird diese Aufgabe mit der erfindungsgemässen Polyurethanzusammensetzung gemäss Anspruch 1 gelöst. Sie umfasst ein Polyol, ein kurzkettiges Diol sowie eine Verbindung mit mindestens einer Thiolgruppe in der ersten Komponente und einem hohen Gehalt an Polyisocyanat in der zweiten Komponente. Weiterhin enthält die Zusammensetzung einen Metallkatalysator für die Aushärtung der Zusammensetzung, welcher Thiokomplexe bilden kann, wobei das Verhältnis von Thiolgruppen zu Metallatomen in der Zusammensetzung festgelegt ist. Die Zusammensetzung verfügt im ausgehärteten Zustand über eine sehr hohe Festigkeit und gute Elastizität. Nach Mischen der Komponenten härtet sie nach einer genügend langen, innerhalb gewisser Grenzen einstellbaren Topfzeit sehr schnell aus und erreicht bereits nach kurzer Zeit, z.B. wenigen Stunden bis einem Tag, sehr gute mechanische Werte.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft Polyurethanzusammensetzung bestehend aus einer ersten und einer zweiten Komponente; wobei
- die erste Komponente **A**
   - mindestens ein Polyol **A1** mit einer OH-Funktionalität im Bereich von 1.5 bis 4 und einem mittleren Molekulargewicht im Bereich von 250 bis 15'000 g/mol, und
   - mindestens ein Diol **A2** mit zwei Hydroxylgruppen, die über eine C2-bis C9-Kohlenstoffkette verbunden sind, und
   - mindestens eine Verbindung **T**, die mindestens eine Thiolgruppe aufweist, umfasst; und
- die zweite Komponente **B**
   - mindestens ein Polyisocyanat **I**, umfasst;
      wobei in einer der beiden Komponenten zusätzlich mindestens ein Metallkatalysator **K** für die Reaktion von Hydroxylgruppen und Isocyanatgruppen enthalten ist, der Thiokomplexe bilden kann, und
      die zweite Komponente so viel an Polyisocyanat **I** enthält, dass mindestens 5 Gew.-%, bezogen auf die gesamte Polyurethanzusammensetzung, an Isocyanatgruppen enthalten sind, und das molare Verhältnis aller Thiolgruppen der mindestens einen Verbindung **T** zu allen Metallatomen des mindestens einen Metallkatalysators **K** zwischen 1:1 und 250:1 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23 °C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der beiden Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25 %, gemeint sind.

Als "Raumtemperatur" wird im vorliegenden Dokument eine Temperatur von 23 °C bezeichnet.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

Die erste Komponente **A** enthält zunächst mindestens ein Polyol **A1** mit einer OH-Funktionalität im Bereich von 1.5 bis 4 und einem mittleren Molekulargewicht im Bereich von 250 bis 15'000 g/mol.

Geeignete Polyole **A1** sind prinzipiell alle gängigen Polyole zur Herstellung von Polyurethanpolymeren. Geeignet sind insbesondere Polyetherpolyole, Polyesterpolyole, Poly(meth)acrylatpolyole, Polybutadienpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer

Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen ein mittleres Molekulargewicht von 250 bis 15'000 g/mol, insbesondere von 400 bis 10'000 g/mol, bevorzugt von 1'000 bis 8'000 und eine mittlere OH-Funktionalität im Bereich von 1.5 bis 4, bevorzugt 1.7 bis 3, auf. Die Zusammensetzung kann jedoch durchaus auch Anteile an Monoolen (Polymere mit nur einer Hydroxylgruppe) enthalten.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Die erste Komponente **A** enthält weiterhin mindestens ein Diol **A2** mit zwei Hydroxylgruppen, die über eine C2- bis C9-Kohlenstoffkette verbunden sind.

Geeignet als Diol **A2** sind lineare oder verzweigte Alkylendiole mit zwei primären oder sekundären Hydroxylgruppen, Alkylendiole mit einer primären und einer sekundären Hydroxylgruppe sowie cycloaliphatische Diole. Bevorzugt ist das Diol **A2** ein lineares aliphatisches Diol mit zwei primären Hydroxylgruppen, die über eine C4- bis C9-Kohlenstoffkette verbunden sind. Ein solches Diol hat den Vorteil, dass Polyurethane mit besonders hohen E-Moduln im Bereich niedriger Dehnung, beispielsweise zwischen 0 und 5%, erhalten werden, was insbesondere für Strukturklebstoffe vorteilhaft ist.

Insbesondere ist das Diol **A2** ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt ist das Diol **A2** ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Am meisten bevorzugt ist das Diol **A2** ausgewählt aus der Gruppe bestehend aus 1,4-Butandiol, 1,5-Pentandiol, 1,6-Hexandiol und 1,9-Nonandiol. Diese Diole sind kommerziell gut zugänglich und ermöglichen Polyurethane mit besonders hohen E-Moduln bei geringer Dehnung nach der Aushärtung.

Bevorzugt enthält die erste Komponente **A** zwischen 5 und 25 Gew.-%, insbesondere 10 bis 15 Gew.-%, an Diol **A2**.

Zusätzlich zu diesen genannten Polyolen **A1** und **A2** können kleine Mengen von weiteren niedermolekularen zwei- oder mehrwertigen Alkoholen wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedermolekulare Alkoxylierungsprodukte der vorgenannten zwei- und mehrwertigen Alkohole, sowie Mischungen der vorgenannten Alkohole mitverwendet werden. Weiterhin können auch Polyole, die andere Heteroatome enthalten, wie beispielsweise Methyldiethanolamin oder Thiodiglykol, enthalten sein.

Die erste Komponente **A** enthält weiterhin mindestens eine Verbindung **T**, die mindestens eine Thiolgruppe aufweist. Geeignet sind alle Verbindungen, die mindestens eine Thiol- oder Mercaptogruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit besonders genau eingestellt werden kann. Verbindungen mit zwei Thiolgruppen haben den Vorteil, dass die mechanischen Eigenschaften der Zusammensetzung nach dem Aushärten verbessert werden.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind beispielsweise Ethylenglykol-di(3-mercaptopropionat), Ethylenglykol-dimercaptoacetat, Dipentaerythritol-hexa(3-mercaptopropionat), 2,3-Dimercapto-1,3,4-thiadiazol oder Pentaerythritol-tetrakis(3-mercaptopropionat).

Bevorzugt ist die Verbindung **T** ausgewählt aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

Das molare Verhältnis aller Thiolgruppen der mindestens einen Verbindung **T** zu allen Metallatomen des mindestens einen Metallkatalysators **K** muss zwischen 1:1 und 250:1 liegen. Bevorzugt liegt es zwischen 2:1 und 150:1, insbesondere zwischen 5:1 und 100:1. Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird. In vielen Fällen, die für die erfindungsnahe Anwendung als Strukturklebstoff oder Kompositwerkstoffmatrix geeignet sind und bedingt durch die hohe Menge an Isocyanatgruppen in Anwesenheit eines Katalysators aber ohne Verbindung **T**, wird dabei gar keine wirkliche Topfzeit erreicht, und die Zusammensetzung beginnt praktisch beim Mischen der beiden Komponenten auszuhärten.

Die obere Grenze der einstellbaren Topfzeit ist dementsprechend diejenige Topfzeit, die ohne Verwendung eines Katalysators bedingt durch die unkatalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator langsamer und unter Ausbildung minderwertiger mechanischer Eigenschaften des gehärteten Materials ab.

Der wesentliche Vorteil, der durch die erfindungsgemässe zweikomponentige Polyurethanzusammensetzung erreicht wird, ist ein ausserordentlich rasch aushärtendes und Festigkeit aufbauendes System, das aber gleichzeitig eine ausreichend lange Topfzeit aufweist, um anwenderfreundlich verarbeitet werden zu können. Somit können beispielsweise strukturelle Verklebungen auch an grösseren Substraten durchgeführt werden, die sehr kurz nach der Applikation des Klebstoffs bereits mechanisch belastet werden können. Dies führt beispielsweise zu einer signifikanten Verkürzung von Taktzeiten in der industriellen Fertigung. Ein weiterer Vorteil der erfindungsgemässen Polyurethanzusammensetzungen ist die Möglichkeit, die Topfzeit wie oben beschrieben einstellen zu können. Dies ist insbesondere für automatisierte Anwendungen sehr vorteilhaft und kann beispielsweise eine weitere Optimierung der Taktzeiten in der industriellen Fertigung ermöglichen, da die Topfzeit auf die gewünschte Anwendung eingestellt werden kann.

Die zweite Komponente **B** enthält zunächst mindestens ein Polyisocyanat **I**.

Das Polyisocyanat **I** ist in relativ hohen Mengen enthalten, was für die Ausbildung genügend guter mechanischer Eigenschaften für die Verwendung als Strukturklebstoff oder Kompositwerkstoffmatrix sehr vorteilhaft ist.

Die zweite Komponente enthält so viel an Polyisocyanat **I**, dass mindestens 5 Gew.-%, insbesondere mindestens 6 Gew.-%, bevorzugt mindestens 7.5 Gew.-%, bezogen auf die gesamte Polyurethanzusammensetzung, an Isocyanatgruppen enthalten sind.

Als Polyisocyanate **I** für die Herstellung des Polyurethanpolymers in der erfindungsgemässen Zusammensetzung können alle handelsüblichen, für die Polyurethanherstellung geeigneten Polyisocyanate, insbesondere Diisocyanate, verwendet werden.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Covestro), Tolonate^{®} HDB und HDB-LV (von Vencorex) und Duranate^{®} 24A-100 (von Asahi Kasei); HDI-Isocyanurate, wie Desmodur^{®} N 3300, N 3600 und N 3790 BA (alle von Covestro), Tolonate^{®} HDT, HDT-LV und HDT-LV2 (von Vencorex), Duranate^{®} TPA-100 und THA-100 (von Asahi Kasei) und Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate, wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); sowie gemischte Isocyanurate auf Basis TDI/HDI, zum Beispiel als Desmodur^{®} HL (von Covestro). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Covestro) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Covestro), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem stöchiometrischen Überschuss vorliegen.

In der erfindungsgemässen Zusammensetzung ist Polyisocyanat **I** bevorzugt in einer Menge von 10 Gew.-% bis 35 Gew.-%, insbesondere 15 Gew.-% bis 30 Gew.-%, besonders bevorzugt 20 Gew.-% bis 25 Gew.-%, bezogen auf die gesamte Zusammensetzung, vorhanden.

Die erste Komponente **A** und/oder die zweite Komponente **B** enthält weiterhin mindestens einen Metallkatalysator **K** für die Reaktion von Hydroxylgruppen und Isocyanatgruppen, der Thiokomplexe bilden kann. Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Bevorzugt ist der Metallkatalysator **K** nur in der ersten Komponente **A** enthalten. Dies hat den Vorteil, dass eine bessere Lagerstabilität erreicht wird.

Geeignete Metallkatalysatoren sind beispielsweise Bismut-, Zink-, Zinn- oder Zirkoniumverbindungen, was Komplexe und Salze dieser Metalle einschliesst.

Bevorzugt umfasst der Metallkatalysator **K** eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder -Neodecanoat, Bismutnitrat, Bismuthalogenide wie z.B. Bromid, Chlorid, lodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP 1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator **K** ein Bismut(III)-Komplex, der mindestens einen Liganden auf 1,3-Ketoamidbasis aufweist. Solche Komplexe sind beschrieben in der EP 2791153. Bevorzugt handelt es sich dabei um ein Bismut(III)-Carboxylat, das 1 bis 3 Moläquivalente eines 1,3-Ketoamidliganden aufweist.

Die Polyurethanzusammensetzung kann neben den bereits erwähnten weitere Bestandteile, wie sie der Fachmann aus der Zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln, sowie flammhemmende Füllstoffe, wie Hydroxide oder Hydrate, insbesondere Hydroxide oder Hydrate von Aluminium, bevorzugt Aluminiumhydroxid.

Die Zugabe von Füllstoffen ist dahingehend von Vorteil, dass dadurch die Festigkeit der ausgehärteten Polyurethanzusammensetzung erhöht wird. Bevorzugt enthält die Polyurethanzusammensetzung mindestens einen Füllstoff ausgewählt aus der Gruppe bestehend aus Calciumcarbonat, Russ, Kaolin, Baryt, Talk, Quarzmehl, Dolomit, Wollastonit, Kaolin, calciniertes Kaolin und Glimmer (Mica). Als Füllstoffe besonders bevorzugt sind gemahlene Calciumcarbonate, calcinierte Kaoline oder Russ.

Es ist kann von Vorteil sein, eine Mischung verschiedener Füllstoffe einzusetzen. Am meisten bevorzugt sind Kombinationen von gemahlenen Calciumcarbonaten oder calcinierten Kaolinen und Russ.

Der Gehalt an Füllstoff **F** in der Zusammensetzung liegt bevorzugt im Bereich von 5 Gew.-% bis 50 Gew.-%, insbesondere 10 Gew.-% bis 40 Gew.-%, besonders bevorzugt 15 Gew.-% bis 30 Gew.-%, bezogen auf die gesamte Zusammensetzung.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere organofunktionelle Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Polyurethanzusammensetzung enthält bevorzugt weniger als 0.5 Gew.-%, insbesondere weniger als 0.1 Gew.-%, bezogen auf die gesamte Zusammensetzung, an Carbonsäuren. Allenfalls durch den Metallkatalysator eingebrachte Carboxylatliganden zählen hierbei nicht zu den gemeinten Carbonsäuren.

Eine bevorzugte Polyurethanzusammensetzung enthält eine erste Komponente **A**, welche
- 30 bis 90 Gew.-%, bevorzugt 40 bis 80 Gew.-%, insbesondere 50 bis 70 Gew.-%, Polyol **A1**,
- 5 bis 25 Gew.-%, bevorzugt 10 bis 20 Gew.-%, insbesondere 12 bis 18 Gew.-%, Diol **A2**,
- 1 bis 5 Gew.-%, bevorzugt 1.25 bis 3 Gew.-%, insbesondere 1.5 bis 2 Gew.-%, einer Verbindung **T**, die mindestens eine Thiolgruppe aufweist,
- 0.05 bis 0.5 Gew.-%, bevorzugt 0.1 bis 0.3 Gew.-%, insbesondere 0.15 bis 0.2 Gew.-%, eines Metallkatalysators **K**, und
- 10 bis 50 Gew.-%, bevorzugt 15 bis 40 Gew.-%, insbesondere 20 bis 30 Gew.-%, Füllstoffe,
sowie gegebenenfalls weitere Bestandteile enthält.

Eine bevorzugte Polyurethanzusammensetzung enthält eine zweite Komponente **B**, welche 40 bis 100 Gew.-%, insbesondere 45 bis 80 Gew.-%, Polyisocyanat **I** enthält.

Die erste und die zweite Komponente werden vorteilhaft so formuliert, dass ihr Mischungsverhältnis in Gewichtsteilen im Bereich von 10:1 bis 1:10, bevorzugt 5:1 bis 1:5, insbesondere 2:1 bis 1:2, liegt.

In der vermischten Polyurethanzusammensetzung liegt das Verhältnis zwischen der Anzahl Isocyanatgruppen und der Anzahl gegenüber Isocyanaten reaktiven Gruppen vor der Aushärtung vorzugsweise ungefähr im Bereich von 1.2 bis 1, bevorzugt 1.15 bis 1.05. Es ist aber auch möglich, wenn auch meist nicht bevorzugt, dass ein unterstöchiometrischer Anteil an Isocyanatgruppen gegenüber Isocyanaten reaktiven Gruppen vorliegt.

Die Herstellung der beiden Komponenten erfolgt getrennt voneinander und vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit der zweiten Komponente beginnt die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff, Vergussmasse oder Matrix in Kompositwerkstoffen.

Die Erfindung betrifft somit auch ein Verfahren zum Verkleben von einem ersten Substrat mit einem zweiten Substrat, welches die Schritte umfasst:
- Mischen der vorgängig beschriebenen ersten und zweiten Komponente,
- Applizieren der vermischten Polyurethanzusammensetzung auf mindestens eine der zu verklebenden Substratoberflächen,
- Fügen der zu verklebenden Substrate innerhalb der Topfzeit,
- Aushärten der Polyurethanzusammensetzung.

Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen ersten und zweiten Komponente,
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet. Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene Polyurethanzusammensetzung zeichnet sich durch eine hohe Festigkeit und Elastizität, welche über einen weiten Temperaturbereich von - 35 bis 85 °C recht konstant sind, und über gute, weitgehend temperaturunabhängige Haftungseigenschaften auf metallischen Substraten aus. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

In einem weiteren Aspekt umfasst die Erfindung daher ein Verfahren zu einem Verfüllen von Fugen und Spalten in einem Substrat umfassend die Schritte
a) Mischen der ersten Komponente und der zweiten Komponente einer zweikomponentigen Polyurethanzusammensetzung wie sie vorgehend beschrieben ist,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

Die Polyurethanzusammensetzung wird weiter vorzugsweise als Matrix in Kompositwerkstoffen eingesetzt. Dabei dient die Polyurethanzusammensetzung als Bindemittel, in das Fasern oder andere verstärkende Strukturen eingebettet werden. In einem weiteren Aspekt umfasst die Erfindung daher die Verwendung einer zweikomponentigen Polyurethanzusammensetzung als Matrix in Kompositwerkstoffen.

Im Folgenden wird die Erfindung durch Beispiele weiter erläutert, die die Erfindung aber in keiner Weise beschränken sollen.

### Beispiele

### Verwendete Substanzen:

| Voranol CP 4755 | Voranol^{®} CP 4755 (Dow Chemical); Polyethertriol, CAS Nr. 9082-00-2; Mw: 5000 g/mol; OH-Zahl: 35 mg KOH/g |
|---|---|
| 1,4-Butandiol | (Sigma Aldrich) |
| 1,5-Pentandiol | (Sigma Aldrich) |
| Silquest A-189 | Silquest^{®} A-189 (Momentive) 3-Mercaptopropyltrimethoxysilan |
| Thiocure GDMA | Thiocure^{®} GDMA (Bruno Bock Thiochemicals); Glycoldimercaptoacetat |
| Thiocure Di-PETMP | Thiocure^{®} Di-PETMP (Bruno Bock Thiochemicals); Dipentaerythritol-hexa(3-mercaptopropionat) |
| Thiocure GDMP | Thiocure^{®} GDMP (Bruno Bock Thiochemicals); Glycol-di(3-mercaptopropionat) |
| *Polymer 1* | NCO-funktionelles Polyetherpolyurethan (Herstellung siehe unten); 2.3 Gew.-% NCO |
| Desmodur CD-L | Desmodur^{®} CD-L (Covestro); modifiziertes Diphenylmethan-4,4'diisocyanat (MDI); NCO-Gehalt: 29.5 Gew.-% |
| Desmodur 44 MC flüssig | Desmodur^{®} 44 MC flüssig (Covestro); monomeres Diphenylmethan-4,4'diisocyanat (MDI); NCO-Gehalt: 33.6 Gew.-% |
| Monarch 570 | Monarch^{®} 570 (Cabot Corp.); Russ (Füllstoff) |
| Whitetex | White Tex^{@} (BASF); kalziniertes Aluminiumsilicat (Füllstoff) |
| Bi-Kat. (2.68 mmol Bi /g) | 35 Gew.-% Coscat 83 (Organobismut-Katalysator; Coscat^{®} 83 (Vertellus Specialties Inc.)) in Weichmacher mit 1 Moläquivalent 8-Hydroxychinolin (bezogen auf Bi) |

### Herstellung Polymer 1

1300 g Polyoxypropylendiol (Acclaim^{®} 4200 N,Covestro; OH-Zahl 28.5 mg KOH/g), 2600 g Polyoxypropylenpolyoxyethylentriol (Voranol^{®} CP 4755, Dow Chemical Company; OH-Zahl 34.0 mg KOH/g), 600 g 4,4'-Methylendiphenyldiisocyanat (4,4'-MDI; Desmodur^{®} 44 MC L, Covestro) und 500 g Diisodecylphthalat (DIDP; Palatinol^{®} Z, BASF SE, Deutschland) wurden nach bekanntem Verfahren bei 80 °C zu einem NCO-terminierten Polyurethanpolymer mit einem Gehalt an Isocyanatgruppen von 2.3 Gew.-% umgesetzt.

### Herstellung von Polyurethanzusammensetzungen

Für jede Zusammensetzung wurden die in den Tabellen angegebenen Inhaltsstoffe in den angegebenen Mengen (in Gewichtsteilen oder Gew.-%) der ersten Komponente **A** mittels eines Vakuumdissolvers unter Feuchtigkeitsausschluss zu einer homogenen Paste verarbeitet und aufbewahrt. Ebenso wurden die in den Tabellen angegebenen Inhaltsstoffe der zweiten Komponente **B** verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1B, gebracht und während der in den Tabellen angegebenen Zeit (1 und 7 Tage) bei 23°C und 50% r.h. (relative Luftfeuchtigkeit) und anschliessend während 7 Tagen bei 90°C gelagert bzw. ausgehärtet. Nach einer Konditionierungszeit von 24h 23°C, 50% r.h., wurden das Elastizitätsmodul im Bereich von 0.05 bis 0.25 % Dehnung (" **E-Modul**"), die **Zugfestigkeit** und die **Bruchdehnung** der so hergestellten Probekörper gemäss DIN EN ISO 527 auf einer Zwick Z020 Zugprüfmaschine bei 23°C und 50% r.h. und einer Prüfgeschwindigkeit von 10 mm/ min gemessen.

Der **Weiterreisswiderstand** wurde bestimmt nach DIN ISO 34-1.

Zur Messung der **Zugscherfestigkeit** wurden diverse Prüfkörper hergestellt, wobei der Klebstoff jeweils 1 Minute nach Abschluss der Mischzeit zwischen zwei mit Heptan entfetteten KTL-lackierten Stahlblechen in einer Schichtdicke von 2 mm und auf einer überlappenden Klebefläche 15 x 45 mm aufgebracht wurde. Die Prüfkörper wurden während 24 h bei 23°C und anschliessend während 3h bei 80°C gelagert bzw. ausgehärtet. Nach einer Konditionierungszeit von 24h bei 23 °C, 50% r.h., wurde die Zugscherfestigkeit nach DIN EN 1465 bestimmt.

Die **Tg**-Werte (Glasübergangstemperaturen) wurden bestimmt anhand von DMTA-Messungen an scheibenförmigen Proben (Dicke 2-3 mm, Durchmesser 10 mm), welche während 7 Tagen im Normklima ("NK"; 23 °C, 50 % relative Feuchtigkeit "r.h.") ausgehärtet waren, mit einem Mettler DMA/SDTA 861e Gerät. Die Messbedingungen waren: Messung in Scherung, 10 Hz Anregungsfrequenz und Aufheizrate von 5 K/min. Die Proben wurden auf -60 °C abgekühlt und unter Bestimmung des komplexen Schermoduls G* [MPa] auf 200°C erwärmt, wobei ein Maximum in der Kurve für den Verlustwinkel "tan δ" als Tg-Wert abgelesen wurde.

Die **Topfzeit** wurde in einem Viskosimeter gemessen als Zeit, bis die Viskosität nach Mischen der beiden Komponenten stark anzusteigen begann. Konkret wurde der Schnittpunkt der Steigung der Viskosität (y-Achse) mit der Zeit (x-Achse) als Topfzeit definiert. Die Messung der Viskosität erfolgte auf einem Platten-Platten Rheometer MCR 302 (Firma Anton Paar) mit einem Plattendurchmesser von 25 mm und einem Plattenabstand von 1 mm bei einer Frequenz von 10 s⁻¹ und einer Temperatur von 20°C. Dazu wurden die beiden Komponenten zunächst während 30 sec in einem Speedmixer (Firma Hauschild) gemischt und sofort für die Messung auf die Platten aufgebracht.

Die Resultate der Messungen sind in den Tabellen angegeben.

Tabellen 1 bis 6 zeigen Versuche zur Demonstration des Einflusses der Menge der Verbindung T, die mindestens eine Thiolgruppe aufweist, auf die Topfzeit.

Tabellen 7 bis 10 zeigen Klebstoffzusammensetzungen, die bezüglich Topfzeit, Aushärteverhalten und Mechanik geprüft wurden. Dabei sind erfindungsgemässe Zusammensetzungen mit "I" gekennzeichnet (I-1 bis I-4) und nicht erfindungsgemässe Referenzzusammensetzungen mit "R" gekennzeichnet (R-1 bis R-6).

**Tabelle 1. Vorversuche V-1a bis V-1f.**

| **Beispiel** | **V-1a** | **V-1b** | **V-1c** | **V-1d** | **V-1e** | **V-1f** |
|---|---|---|---|---|---|---|
| Erste Komponente **A** (Mengen in Gewichtsteilen) | | | | | | |
| Voranol CP 4755 | 97.5 | 97.5 | 97.5 | 97.5 | 97.5 | 97.5 |
| 1,4-Butandiol | 2.5 | 2.5 | 2.5 | 2.5 | 2.5 | 2.5 |
| Silquest A-189 | 0 | 0.32 | 0.64 | 1.28 | 3.19 | 6.39 |

| Zweite Komponente **B** (Mengen in Gewichtsteilen) | | | | | | |
|---|---|---|---|---|---|---|
| *Polymer 1* | 89 | 89 | 89 | 89 | 89 | 89 |
| Desmodur CD-L | 10 | 10 | 10 | 10 | 10 | 10 |
| Bi-Kat. (2.68 mmol Bi /g) | 1 | 1 | 1 | 1 | 1 | 1 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 0 | 0 | 1 | 8 | 23 |

**Tabelle 2. Vorversuche V-2a bis V-2f.**

| **Beispiel** | **V-2a** | **V-2b** | **V-2c** | **V-2d** | **V-2e** | **V-2f** |
|---|---|---|---|---|---|---|
| Erste Komponente **A** (Mengen in Gewichtsteilen) | | | | | | |
| Voranol CP 4755 | 95 | 95 | 95 | 95 | 95 | 95 |
| 1,4-Butandiol | 5 | 5 | 5 | 5 | 5 | 5 |
| Silquest A-189 | 0 | 0.32 | 0.64 | 1.28 | 3.19 | 6.39 |

| Zweite Komponente **B** (Mengen in Gewichtsteilen) | | | | | | |
|---|---|---|---|---|---|---|
| *Polymer 1* | 79.5 | 79.5 | 79.5 | 79.5 | 79.5 | 79.5 |
| Desmodur CD-L | 20 | 20 | 20 | 20 | 20 | 20 |
| Bi-Kat. (2.68 mmol Bi /g) | 0.5 | 0.5 | 0.5 | 0.5 | 0.5 | 0.5 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 0 | 0 | 0 | 4 | 16 |

**Tabelle 3. Vorversuche V-3a bis V-3f.**

| **Beispiel** | **V-3a** | **V-3b** | **V-3c** | **V-3d** | **V-3e** | **V-3f** |
|---|---|---|---|---|---|---|
| Erste Komponente **A** (Mengen in Gewichtsteilen) | | | | | | |
| Voranol CP 4755 | 97.5 | 97.5 | 97.5 | 97.5 | 97.5 | 97.5 |
| 1,4-Butandiol | 2.5 | 2.5 | 2.5 | 2.5 | 2.5 | 2.5 |
| Thiocure GDMA | 0 | 0.14 | 0.28 | 0.56 | 1.41 | 2.82 |

| Zweite Komponente **B** (Mengen in Gewichtsteilen) | | | | | | |
|---|---|---|---|---|---|---|
| *Polymer 1* | 89 | 89 | 89 | 89 | 89 | 89 |
| Desmodur CD-L | 10 | 10 | 10 | 10 | 10 | 10 |
| Bi-Kat. (2.68 mmol Bi /g) | 1 | 1 | 1 | 1 | 1 | 1 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 15 | 41 | 60 | 110 | 210 |

**Tabelle 4. Vorversuche V-4a bis V-4f.**

| **Beispiel** | **V-4a** | **V-4b** | **V-4c** | **V-4d** | **V-4e** | **V-4f** |
|---|---|---|---|---|---|---|
| Erste Komponente **A** (Mengen in Gewichtsteilen) | | | | | | |
| Voranol CP 4755 | 95 | 95 | 95 | 95 | 95 | 95 |
| 1,4-Butandiol | 5 | 5 | 5 | 5 | 5 | 5 |
| Thiocure GDMA | 0 | 0.14 | 0.28 | 0.56 | 1.41 | 2.82 |

| Zweite Komponente **B** (Mengen in Gewichtsteilen) | | | | | | |
|---|---|---|---|---|---|---|
| *Polymer 1* | 79.5 | 79.5 | 79.5 | 79.5 | 79.5 | 79.5 |
| Desmodur CD-L | 20 | 20 | 20 | 20 | 20 | 20 |
| Bi-Kat. (2.68 mmol Bi /g) | 0.5 | 0.5 | 0.5 | 0.5 | 0.5 | 0.5 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 0 | 4 | 7 | 19 | 42 |

**Tabelle 5. Vorversuche V-5a bis V-5f.**

| **Beispiel** | **V-5a** | **V-5b** | **V-5c** | **V-5d** | **V-5e** | **V-5f** |
|---|---|---|---|---|---|---|
| Erste Komponente **A** (Mengen in Gewichtsteilen) | | | | | | |
| Voranol CP 4755 | 97.5 | 97.5 | 97.5 | 97.5 | 97.5 | 97.5 |
| 1,4-Butandiol | 2.5 | 2.5 | 2.5 | 2.5 | 2.5 | 2.5 |
| Thiocure Di-PETMP | 0 | 0.32 | 0.64 | 1.28 | 3.19 | 6.39 |

| Zweite Komponente **B** (Mengen in Gewichtsteilen) | | | | | | |
|---|---|---|---|---|---|---|
| *Polymer 1* | 89 | 89 | 89 | 89 | 89 | 89 |
| Desmodur CD-L | 10 | 10 | 10 | 10 | 10 | 10 |
| Bi-Kat. (2.68 mmol Bi /g) | 1 | 1 | 1 | 1 | 1 | 1 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 200 | 400 | 850 | >1000 | >1000 |

**Tabelle 6. Vorversuche V-6a bis V-6f.**

| **Beispiel** | **V-6a** | **V-6b** | **V-6c** | **V-6d** | **V-6e** | **V-6f** |
|---|---|---|---|---|---|---|
| Erste Komponente **A** (Mengen in Gewichtsteilen) | | | | | | |
| Voranol CP 4755 | 95 | 95 | 95 | 95 | 95 | 95 |
| 1,4-Butandiol | 5 | 5 | 5 | 5 | 5 | 5 |
| Thiocure Di-PETMP | 0 | 0.32 | 0.64 | 1.28 | 3.19 | 6.39 |

| Zweite Komponente **B** (Mengen in Gewichtsteilen) | | | | | | |
|---|---|---|---|---|---|---|
| *Polymer 1* | 79.5 | 79.5 | 79.5 | 79.5 | 79.5 | 79.5 |
| Desmodur CD-L | 20 | 20 | 20 | 20 | 20 | 20 |
| Bi-Kat. (2.68 mmol Bi /g) | 0.5 | 0.5 | 0.5 | 0.5 | 0.5 | 0.5 |

| Eigenschaften der Mischung beider Komponenten **A** und **B** | | | | | | |
|---|---|---|---|---|---|---|
| Molverhältnis SH : Bi | 0 | 5:1 | 10:1 | 20:1 | 50:1 | 100:1 |
| Topfzeit [min] | 0 | 40 | 200 | 400 | 1200 | >2000 |

Die Vorversuche V1a bis V6f stellen Versuche dar, die den Einfluss verschiedener Verbindungen **T**, die mindestens eine Thiolgruppe aufweisen, auf die Topfzeit demonstrieren, sowie die Möglichkeit, die Topfzeit innerhalb gewisser Grenzen einstellen zu können.

Die Resultate zeigen deutlich, dass durch den Einsatz von Verbindungen **T** die Topfzeit in zweikomponentigen Polyurethanzusammensetzungen, die ohne Verbindung **T** gar nicht verarbeitet werden könnten, über das Molverhältnis von Thiolgruppen zu Metallatomen des Katalysators eingestellt werden kann.

**Tabelle 7. * NCO-Gehalt in Gew.-% Isocyanatgruppen bezogen auf die gesamte Polyurethanzusammensetzung.**

| **Beispiel** | **I-1** | **R-1** | **R-2** | **R-3** | **I-2** |
|---|---|---|---|---|---|
| Erste Komponente A (Mengen in Gew.-%, bezogen auf erste Komponente **A**) | | | | | |
| Voranol CP 4755 | 60 | 60.5 | 63 | 62.5 | 61.25 |
| 1,5-Pentandiol | 12 | 12 | 12 | 12 | 12 |
| Monarch 570 | 10 | 10 | 10 | 10 | 10 |
| Whitex | 15 | 15 | 15 | 15 | 15 |
| Thiocure GDMP | 2.5 | 2.5 | - | - | 1.25 |
| Bi-Kat. | 0.5 | - | - | 0.5 | 0.5 |
| TOTAL | 100 | 100 | 100 | 100 | 100 |

| Zweite Komponente **B** ((Mengen in Gew.-%, bezogen auf erste Komponente **B**) | | | | | |
|---|---|---|---|---|---|
| Desmodur CD-L | 44 | 44 | 44 | 44 | 44 |
| Voranol CP-4755 | 32 | 32 | 32 | 32 | 32 |
| Whitex | 15 | 15 | 15 | 15 | 15 |
| Monarch 570 | 10 | 10 | 10 | 10 | 10 |
| TOTAL | 100 | 100 | 100 | 100 | 100 |
| Mischungsverhältnis **A:B** (v/v) | 1:1 | 1:1 | 1:1 | 1:1 | 1:1 |
| NCO-Gehalt [%] * | 6.1 | | | | |

**Tabelle 8. * NCO-Gehalt in Gew.-% Isocyanatgruppen bezogen auf die gesamte Polyurethanzusammensetzung.**

| **Beispiel** | **I-3** | **R-4** | **R-5** | **R-6** | **I-4** |
|---|---|---|---|---|---|
| Erste Komponente **A** (Mengen in Gew.-%, bezogen auf erste Komponente **A**) | | | | | |
| Voranol CP 4755 | 56 | 56.5 | 59.5 | 59 | 57.5 |
| 1,5-Pentandiol | 18 | 18 | 18 | 18 | 18 |
| Monarch 570 | 12.5 | 12.5 | 12.5 | 12.5 | 12.5 |
| Whitetex | 10 | 10 | 10 | 10 | 10 |
| Thiocure GDMP | 3 | 3 | - | - | 1.5 |
| Bi-Kat. | 0.5 | - | - | 0.5 | 0.5 |
| TOTAL | 100 | 100 | 100 | 100 | 100 |

| Zweite Komponente **B** (Mengen in Gew.-%, bezogen auf erste Komponente **B**) | | | | | |
|---|---|---|---|---|---|
| Desmodur CD-L | 30 | 30 | 30 | 30 | 30 |
| Desmodur 44 MC flüssig | 25 | 25 | 25 | 25 | 25 |
| Voranol CP-4755 | 22.5 | 22.5 | 22.5 | 22.5 | 22.5 |
| Monarch 570 | 12.5 | 12.5 | 12.5 | 12.5 | 12.5 |
| Whitetex | 10 | 10 | 10 | 10 | 10 |
| TOTAL | 100 | 100 | 100 | 100 | 100 |
| Mischungsverhältnis **A:B** (v/v) | 1:1 | 1:1 | 1:1 | 1:1 | 1:1 |
| NCO-Gehalt [%] * | 8.1 | | | | |

Die Resultate in den Tabellen 9 und 10 zeigen deutlich, dass die erfindungsgemässen Zusammensetzungen sehr rasch Festigkeit, insbesondere Zugfestigkeit und Zugshcerfestigkeit, aufbauen und den nicht erfindungsgemässen Zusammensetzungen bezüglich mechanischen Eigenschaften, Aushärtegeschwindigkeit und sogar Adhäsionsverhalten signifikant überlegen sind.

**Tabelle 9. "n/b" steht für "nicht bestimmt".**

| **Beispiel** | | **I-1** | **R-1** | **R-2** | **R-3** | **I-2** |
|---|---|---|---|---|---|---|
| Topfzeit [min] | | 62 | 85 | 75 | 18 | 32 |
| Zugscherfestigkeit [MPa] (*Anteil kohäsiver Bruch [%]*) | 1h NK | 2.2 (*0*) | n/b | n/b | 0.84 (*0*) | 4.3 (*60*) |
| | 2h NK | 12.3 (*100*) | 0.1 (*0*) | 0.1 (*0*) | 1.7 (*0*) | 8.7 (*100*) |
| | 4h NK | 13.5 (*100*) | 0.2 (*0*) | 0.2 (*0*) | 3.4 *(30)* | 10.5 (*100*) |
| | 1d NK | 14.6 (*100*) | 1.1 (*0*) | 2.0 (*0*) | 9.1 (*100*) | 12.4 (*100*) |
| | 7d NK | 12.8 (*100*) | 8.7 (*100*) | 11.4 (*100*) | 13.6 (*100*) | 11.9 (*100*) |
| Zugfestigkeit [MPa] (*E-Modul [MPa]*) | 1d NK | 16.2 (*76.7*) | 4.1 (*130*) | 5.5 (*160*) | 12.9 (125) | 13.8 (*100*) |
| | 7d NK | 14.2 (*83.2*) | 9.2 (*159*) | 9.33 (*154*) | 12.5 (*151*) | 10.3 (*101*) |
| | 7d NK + 7d 90°C | 20.5 (*96*) | 12.7 (*178*) | 14.2 (*177*) | 14.2 (*139*) | 15.0 (*107*) |
| Bruchdehnung [%] | 1d NK | 264 | 18.4 | 34.1 | 213.6 | 218.5 |
| | 7d NK | 195.5 | 97.6 | 131.8 | 139.2 | 107.3 |
| | 7d NK + 7d 90°C | 352.6 | 170.6 | 224.5 | 172.1 | 233.4 |
| Weiterreisswiderstand [MPa] | 7d NK | 26.4 | 36.3 | 34.5 | 32.4 | 26.9 |
| Tg [°C] | 7d NK | -25.5 | -49.7 | -52.1 | -46.6 | -42.1 |

**Tabelle 10.**

| **Beispiel** | | **I-3** | **R-4** | **R-5** | **R-6** | **I-4** |
|---|---|---|---|---|---|---|
| Topfzeit [min] | | 30 | 33 | 32 | 4 | 19 |
| Zugscherfestigkeit [MPa] (*Anteil kohäsiver Bruch [%]*) | 1h NK | 5.5 (*10*) | 0.2 (*0*) | 0.3 (*0*) | 1.9 (*0*) | 3.4 (*0*) |
| | 2h NK | 7.3 (*40*) | 0.8 (*0*) | 1.1 (*0*) | 2.5 (*0*) | 4.8 (*0*) |
| | 4h NK | 7.9 (*100*) | 1.1 (*0*) | 1.2 (*0*) | 5.4 (*0*) | 7.0 (*10*) |
| | 1d NK | 14.1 (*100*) | 4.2 (*50*) | 4.7 (*50*) | 8.1 (*80*) | 13.0 (*100*) |
| | 7d NK | 14.7 (*100*) | 8.9 (*100*) | 11.5 (*100*) | 12.5 (*100*) | 13.0 (*100*) |
| Zugfestigkeit [MPa] (*E-Modul [MPa]*) | 1d NK | 14.7 (*341.6*) | 7.2 (*349*) | 7.4 (*360*) | 12.8 (347) | 14.1 (*361*) |
| | 7d NK | 20.1 (*338*) | 14.1 (*456*) | 15.2 (*483*) | 18.4 (*391*) | 13.7 (*450*) |
| | 7d NK + 7d 90°C | 21.5 (*353*) | 21.3 (*479*) | 17.3 (*450*) | 16.3 (*394*) | 18.4 (*369*) |
| Bruchdehnung [%] | 1d NK | 132.1 | 4.4 | 4.4 | 94.5 | 93.6 |
| | 7d NK | 266.7 | 175.3 | 177.5 | 231.8 | 52.3 |
| | 7d NK + 7d 90°C | 237.3 | 314.3 | 132.1 | 99.8 | 191.3 |
| Weiterreisswiderstand [MPa] | 7d NK | 58.8 | 66.0 | 70.8 | 63.3 | 59.3 |
| Tg [°C] | 7d NK | -45.8 | -52.8 | -52.2 | -49.0 | -48.6 |

## Patentansprüche

1. Polyurethanzusammensetzung bestehend aus einer ersten und einer zweiten Komponente; wobei
- die erste Komponente **A**
- mindestens ein Polyol **A1** mit einer OH-Funktionalität im Bereich von 1.5 bis 4 und einem mittleren Molekulargewicht (Zahlenmittel) Mₙ im Bereich von 250 bis 15'000 g/mol, und
- mindestens ein Diol **A2** mit zwei Hydroxylgruppen, die über eine C2-bis C9-Kohlenstoffkette verbunden sind, und
- mindestens eine Verbindung **T**, die mindestens eine Thiolgruppe aufweist, umfasst; und
- die zweite Komponente **B**
- mindestens ein Polyisocyanat **I** umfasst;
wobei in einer der beiden Komponenten zusätzlich mindestens ein Metallkatalysator **K** für die Reaktion von Hydroxylgruppen und Isocyanatgruppen enthalten ist, der Thiokomplexe bilden kann, und
die zweite Komponente so viel an Polyisocyanat **I** enthält, dass mindestens 5 Gew.-%, bezogen auf die gesamte Polyurethanzusammensetzung, an Isocyanatgruppen enthalten sind, und das molare Verhältnis aller Thiolgruppen der mindestens einen Verbindung **T** zu allen Metallatomen des mindestens einen Metallkatalysators **K** zwischen 1:1 und 250:1 liegt.

2. Polyurethanzusammensetzung gemäss Anspruch 1, **dadurch gekennzeichnet, dass** der Metallkatalysator **K** eine Bismut(III)-Verbindung umfasst, bevorzugt ein Bismut(III)-carboxylat.

3. Polyurethanzusammensetzung gemäss Anspruch 2, **dadurch gekennzeichnet, dass** die Bismut(III)-Verbindung zusätzlich einen 8-Hydroxychinolinliganden oder einen 1,3-Ketoamidliganden aufweist.

4. Polyurethanzusammensetzung gemäss einem der Ansprüche 1 bis 3, **dadurch gekennzeichnet, dass** das Diol **A2** ein lineares aliphatisches Diol mit zwei primären Hydroxylgruppen ist, die über eine C4- bis C9-Kohlenstoffkette verbunden sind, insbesondere ausgewählt aus der Gruppe bestehend aus 1,4-Butandiol, 1,5-Pentandiol, 1,6-Hexandiol und 1,9-Nonandiol.

5. Polyurethanzusammensetzung gemäss einem der vorhergehenden Ansprüche, **dadurch gekennzeichnet, dass** die mindestens eine Verbindung **T** eine Polythiolverbindung mit 2 bis 6 Thiolgruppen oder ein Mercaptosilan umfasst.

6. Polyurethanzusammensetzung gemäss Anspruch 5, **dadurch gekennzeichnet, dass** die mindestens eine Verbindung **T** ausgewählt ist aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

7. Polyurethanzusammensetzung gemäss einem der vorhergehenden Ansprüche, **dadurch gekennzeichnet, dass** das molare Verhältnis aller Thiolgruppen der mindestens einen Verbindung **T** zu allen Metallatomen des mindestens einen Metallkatalysators **K** zwischen 5:1 und 100:1 liegt.

8. Polyurethanzusammensetzung gemäss einem der vorhergehenden Ansprüche, **dadurch gekennzeichnet, dass** der Metallkatalysator **K** in der ersten Komponente **A** enthalten ist.

9. Polyurethanzusammensetzung gemäss einem der vorhergehenden Ansprüche, **dadurch gekennzeichnet, dass** das Polyol **A1** ein Polyetherpolyol umfasst.

10. Polyurethanzusammensetzung gemäss einem der vorhergehenden Ansprüche, **dadurch gekennzeichnet, dass** das Polyisocyanat **I** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

11. Polyurethanzusammensetzung gemäss einem der vorgehenden Ansprüche, **dadurch gekennzeichnet, dass** die zweite Komponente **B** ein Isocyanatgruppen aufweisendes Polyurethanpolymer enthält.

12. Polyurethanzusammensetzung gemäss einem der vorgehenden Ansprüche, **dadurch gekennzeichnet, dass** die Zusammensetzung weniger als 0.5 Gew.-%, bezogen auf die gesamte Zusammensetzung, an Carbonsäuren enthält.

13. Verfahren zum Verkleben von einem ersten Substrat mit einem zweiten Substrat, umfassend die Schritte
- Mischen der ersten und der zweiten Komponente einer Polyurethanzusammensetzung gemäss einem der Ansprüche 1 bis 12,
- Applizieren der vermischten Polyurethanzusammensetzung auf mindestens eine der zu verklebenden Substratoberflächen,
- Fügen der zu verklebenden Substrate innerhalb der Offenzeit
- Aushärten der Polyurethanzusammensetzung.

14. Artikel entstanden aus dem Verfahren zum Verkleben gemäss Anspruch 13.

15. Verwendung einer Polyurethanzusammensetzung gemäss einem der Ansprüche 1 bis 12 als struktureller Klebstoff für das Verkleben von zwei Substraten oder als Matrix in Kompositwerkstoffen.

## Claims

1. A polyurethane composition consisting of a first and a second component; wherein
- the first component **A** comprises
- at least one polyol **A1** having an OH functionality in the range from 1.5 to 4 and a mean molecular weight (number average) Mₙ in the range from 250 to 15 000 g/mol, and
- at least one diol **A2** having two hydroxyl groups that are linked via a C2 to C9 carbon chain, and
- at least one compound **T** that has at least one thiol group; and
- the second component **B** comprises
- at least one polyisocyanate **I**;
wherein one of the two components additionally comprises at least one metal catalyst **K** for the reaction of hydroxyl groups and isocyanate groups that is able to form thio complexes and
the second component contains sufficient polyisocyanate **I** for it to comprise at least 5% by weight of isocyanate groups based on the overall polyurethane composition, and
the molar ratio of all the thiol groups in the at least one compound **T** to all metal atoms in the at least one metal catalyst **K** is between 1:1 and 250:1.

2. The polyurethane composition as claimed in claim 1, **characterized in that** the metal catalyst K comprises a bismuth(III) compound, preferably a bismuth(III) carboxylate.

3. The polyurethane composition as claimed in claim 2, **characterized in that** the bismuth(III) compound additionally contains an 8-hydroxyquinoline ligand or a 1,3-ketoamide ligand.

4. The polyurethane composition as claimed in any of claims 1 to 3, **characterized in that** the diol **A2** is a linear aliphatic diol having two primary hydroxyl groups that are linked via a C4 to C9 carbon chain, in particular selected from the group consisting of 1,4-butanediol, 1,5-pentanediol, 1,6-hexanediol, and 1,9-nonanediol.

5. The polyurethane composition as claimed in any of the preceding claims, **characterized in that** the at least one compound **T** comprises a polythiol compound having 2 to 6 thiol groups, or a mercaptosilane.

6. The polyurethane composition as claimed in claim 5, **characterized in that** the at least one compound **T** is selected from the group consisting of ethylene glycol di(3-mercaptopropionate), ethylene glycol dimercaptoacetate, dipentaerythritol hexa(3-mercaptopropionate), and 3-mercaptopropyltrimethoxysilane.

7. The polyurethane composition as claimed in any of the preceding claims, **characterized in that** the molar ratio of all the thiol groups in the at least one compound **T** to all metal atoms in the at least one metal catalyst **K** is between 5:1 and 100:1.

8. The polyurethane composition as claimed in any of the preceding claims, **characterized in that** the metal catalyst **K** is present in the first component **A**.

9. The polyurethane composition as claimed in any of the preceding claims, **characterized in that** the polyol **A1** comprises a polyether polyol.

10. The polyurethane composition as claimed in any of the preceding claims, **characterized in that** the polyisocyanate **I** is a form of diphenylmethane 4,4'-, 2,4'- or 2,2'-diisocyanate that is liquid at room temperature and any mixtures of these isomers (MDI) in the form of polymeric MDI or MDI containing proportions of oligomers or derivatives, in particular carbodiimides.

11. The polyurethane composition as claimed in any of the preceding claims, **characterized in that** the second component **B** comprises a polyurethane polymer containing isocyanate groups.

12. The polyurethane composition as claimed in any of the preceding claims, **characterized in that** the composition comprises less than 0.5% by weight of carboxylic acids, based on the overall composition.

13. A process for bonding a first substrate to a second substrate, comprising the steps of:
- mixing the first and second components of a polyurethane composition as claimed in any of claims 1 to 12,
- applying the mixed polyurethane composition to at least one of the substrate surfaces to be bonded,
- joining the substrates to be bonded within the open time,
- curing the polyurethane composition.

14. An article resulting from the bonding process as claimed in claim 13.

15. The use of a polyurethane composition as claimed in any of claims 1 to 12 as structural adhesive for bonding two substrates or as matrix in composite materials.

## Revendications

1. Composition de polyuréthane constituée par un premier et un deuxième composant ;
- le premier composant A comprenant
- au moins un polyol A1 présentant une fonctionnalité OH dans la plage de 1,5 à 4 et un poids moléculaire moyen (moyenne en nombre) Mₙ dans la plage de 250 à 15.000 g/mole et
- au moins un diol A2 présentant deux groupes hydroxyle, qui sont reliés par l'intermédiaire d'une chaîne carbonée en C2-C9 et
- au moins un composé T qui présente au moins un groupe thiol ; et
- le deuxième composant B comprenant au moins un polyisocyanate I ;
au moins un catalyseur métallique K pour la réaction de groupes hydroxyle et de groupes isocyanate, qui peut former des complexes à fonctionnalité thio, étant contenu en plus dans un des deux composants et le deuxième composant contenant une quantité de polyisocyanate I telle qu'au moins 5% en poids, par rapport à la composition totale de polyuréthane, de groupes isocyanate sont contenus et le rapport molaire de tous les groupes thiol dudit au moins un composé T à tous les atomes métalliques dudit au moins un catalyseur métallique K étant situé entre 1:1 et 250:1.

2. Composition de polyuréthane selon la revendication 1, **caractérisée en ce que** le catalyseur métallique K comprend un composé du bismuth (III), de préférence un carboxylate de bismuth (III).

3. Composition de polyuréthane selon la revendication 2, **caractérisée en ce que** le composé de bismuth (III) présente en outre un ligand 8-hydroxyquinoléine ou un ligand 1,3-cétoamide.

4. Composition de polyuréthane selon l'une quelconque des revendications 1 à 3, **caractérisée en ce que** le diol A2 est un diol linéaire aliphatique présentant deux groupes hydroxyle primaire qui sont reliés par l'intermédiaire d'une chaîne carbonée en C4-C9, en particulier choisi dans le groupe constitué par le 1,4-butanediol, le 1,5-pentanediol, le 1,6-hexanediol et le 1,9-nonanediol.

5. Composition de polyuréthane selon l'une quelconque des revendications précédentes, **caractérisée en ce que** ledit au moins un composé T comprend un composé polythiol comprenant 2 à 6 groupes thiol ou un mercaptosilane.

6. Composition de polyuréthane selon la revendication 5, **caractérisée en ce que** ledit au moins un composé T est choisi dans le groupe constitué par l'éthylèneglycol-di(3-mercaptopropionate), l'éthylèneglycoldimercaptoacétate, le dipentaérythritol-hexa(3-mercaptopropionate) et le 3-mercaptopropyltriméthoxysilane.

7. Composition de polyuréthane selon l'une quelconque des revendications précédentes, **caractérisée en ce que** le rapport molaire de tous les groupes thiol dudit au moins un composé T à tous les atomes métalliques dudit au moins un catalyseur métallique K est situé entre 5:1 et 100:1.

8. Composition de polyuréthane selon l'une quelconque des revendications précédentes, **caractérisée en ce que** le catalyseur métallique K est contenu dans le premier composant A.

9. Composition de polyuréthane selon l'une quelconque des revendications précédentes, **caractérisée en ce que** le polyol A1 comprend un polyétherpolyol.

10. Composition de polyuréthane selon l'une quelconque des revendications précédentes, **caractérisée en ce que** le polyisocyanate I est une forme liquide à température ambiante du diisocyanate de 4,4'-diphénylméthane, de 2,4'-diphénylméthane ou de 2,2'-diphénylméthane et des mélanges quelconques de ces isomères (MDI) sous forme de MDI polymère ou de MDI présentant des proportions d'oligomères ou de dérivés, en particulier des carbodiimides.

11. Composition de polyuréthane selon l'une quelconque des revendications précédentes, **caractérisée en ce que** le deuxième composant B est un polymère de polyuréthane présentant des groupes isocyanate.

12. Composition de polyuréthane selon l'une quelconque des revendications précédentes, **caractérisée en ce que** la composition contient moins de 0,5% en poids, par rapport à la composition totale, d'acides carboxyliques.

13. Procédé pour le collage d'un premier substrat avec un deuxième substrat, comprenant les étapes
- mélange du premier et du deuxième composant d'une composition de polyuréthane selon l'une quelconque des revendications 1 à 12,
- application de la composition mélangée de polyuréthane sur au moins l'une des surfaces de substrat à coller,
- assemblage des substrats à coller pendant le temps ouvert,
- durcissement de la composition de polyuréthane.

14. Article formé à partir du procédé pour le collage selon la revendication 13.

15. Utilisation d'une composition de polyuréthane selon l'une quelconque des revendications 1 à 12 comme adhésif structural pour le collage de deux substrats ou comme matrice dans des matériaux composites.
